# DEMANDE DE BREVET EUROPEEN

(11) **EP 4 345 416 A1**
(43) Date de publication de la demande: **03.04.2024**
(21) Numéro de dépôt: 23199998.8
(22) Date de dépôt: 27.09.2023
(51) Int. Cl.: G01C 19/5712, G01C 19/5733, G01C 19/574, G01C 19/5747

(54) **CAPTEUR INERTIEL DE TYPE MEMS À LIAISON MÉCANIQUE SPÉCIFIQUE**

(30) Priorité: 30.09.2022 FR 2209981
(71) Demandeur: Commissariat à l'Energie Atomique et aux Energies Alternatives, 75015 Paris (FR)
(72) Inventeur: JOET, Loïc, 38054 GRENOBLE CEDEX 09 (FR); REY, Patrice, 38054 GRENOBLE CEDEX 09 (FR)
(74) Mandataire: Cabinet Camus Lebkiri

(57) **Abrégé**

Dispositif micro-électromécanique de type capteur inertiel, comprenant un support, un cadre (3) mobile, guidé en translation selon un axe de déplacement (X) parallèle au support, et comprenant une masse (4) d'épreuve qui s'étend depuis une première extrémité (41), reliée au support par une liaison mécanique, jusqu'à une deuxième extrémité (42), la masse étant reliée, du côté de la deuxième extrémité, à un organe de détection (7) d'un pivotement de la masse par rapport au cadre. Ladite liaison comprend une paroi (50) mince et flexible qui s'étend parallèlement au support, depuis le cadre jusqu'à la première extrémité de la masse d'épreuve, le long d'une ligne moyenne qui est parallèle à l'axe de déplacement du cadre.

## Description

### DOMAINE TECHNIQUE

Le domaine technique de l'invention est celui des dispositifs micro-électromécaniques ou MEMS (pour « MicroElectroMechanical Systems», en anglais). L'invention concerne en particulier un tel dispositif employé comme capteur inertiel, et comprenant une masse d'épreuve pouvant pivoter par rapport à un cadre ou un support sous l'effet des efforts qu'elle subit.

### ARRIERE-PLAN TECHNOLOGIQUE

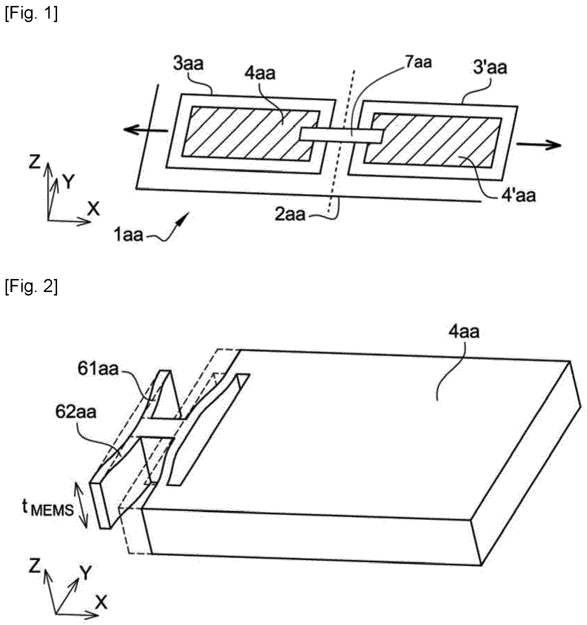

Différents types de gyromètres micro-électromécaniques ont été développés ces dernières années, en particulier des gyromètres à mouvement « hors plan », tels que celui représenté schématiquement sur la figure 1, qui permettent de mesurer une vitesse de rotation autour d'un axe Y parallèle au plan moyen du substrat à partir duquel est réalisé le gyromètre 1aa.

La majeure partie de ce substrat forme une couche, épaisse, qui sert de support 2aa. Le gyromètre 1aa comprend deux cadres mobiles 3aa et 3aa' guidés chacun en déplacement par rapport à ce support 2aa, selon un axe X qui est parallèle au support 2aa (parallèle au substrat), et perpendiculaire à l'axe de mesure de vitesse angulaire de rotation, Y. Lors du fonctionnement du gyromètre, les deux cadres sont mis en mouvement, par exemple par actionnement électrostatique au moyen de peignes interdigités (non représentés), de manière à osciller parallèlement à l'axe X, en opposition de phase l'un par rapport à l'autre (de manière symétrique). Les deux cadres ont alors des vitesses de déplacement, par rapport au support 2aa, qui sont opposées l'une à l'autre.

Chaque cadre 3aa, 3aa' entraine avec lui une masse d'épreuve 4aa, 4aa' (appelée aussi masse Coriolis), qui est reliée au cadre par une liaison autorisant un pivotement de la masse d'épreuve autour d'un axe de rotation (axe de la liaison) parallèle à l'axe Y. Cette liaison s'apparente ainsi, en partie à une liaison pivot, ou, autrement dit, à une charnière.

Lorsque le gyromètre 1aa tourne (i.e. : lorsque le support 2aa tourne) par rapport à un référentiel inertiel (par exemple par rapport au référentiel géocentrique), autour de l'axe Y, avec une vitesse angulaire Ω̅ = Ωy̅, chaque masse 4aa, 4aa' subit alors une force de Coriolis, qui s'exprime comme F̅*_{cor}* = 2 *m_{cor}* (*vx̅*) Λ (Ωy̅) où m_{cor} représente la masse de l'une quelconque de ces deux masses d'épreuve 4aa, 4aa' et où v est sa vitesse de déplacement (selon l'axe X). Cette force (« hors plan ») est donc dirigée selon l'axe Z et elle est de même amplitude mais de sens opposé pour les deux masses d'épreuve 4aa et 4aa' (puisque les deux masses sont entrainées en sens opposés). Pour chaque masse, cette force entraine donc un déplacement hors-plan de la masse, plus précisément un déplacement d'une extrémité mobile de la masse, dans une direction parallèle à l'axe Z. Cette force entraine donc un pivotement de la masse autour de son axe de rotation (axe de la liaison masse-cadre). En l'occurrence, ce déplacement hors plan (ce pivotement) a lieu dans un sens opposé pour les deux masses. Le déplacement hors plan de ces deux masses fait alors tourner un levier de détection 7aa autour d'un axe de détection (parallèle à l'axe Y). Cette rotation du levier est alors mesurée, par exemple grâce à des jauges de contraintes (piézorésistives, piézo-électriques ou à détection résonante) pour en déduire la vitesse angulaire Ω. Ces jauges peuvent être liées d'une part au levier de détection de pivotement, et d'autre part au support, et être agencées de manière à s'étirer ou se comprimer lorsque le levier pivote.

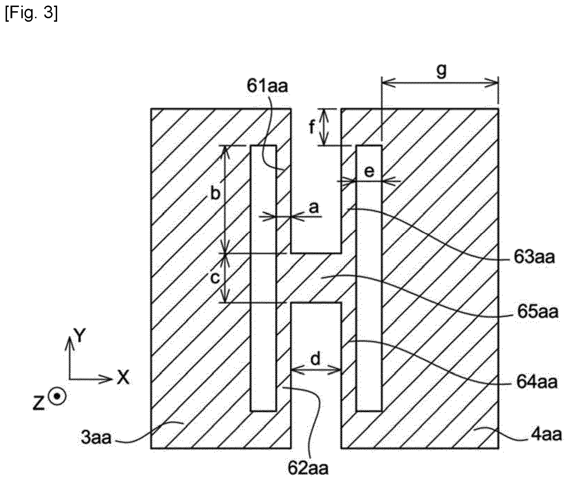

Dans un gyromètre tel que celui-ci, il est connu de réaliser la liaison, qui relie l'un des cadres à la masse d'épreuve correspondante, au moyen d'une ou plusieurs poutres de torsion (figures 2 et 3) :
- présentant chacune une épaisseur t_{MEMS} importante selon l'axe Z, pour être rigide vis-à-vis d'un déplacement selon l'axe Z, afin de fixer la position en Z d'une extrémité de la masse d'épreuve (pour remplir effectivement une fonction de « charnière »),
- et ayant une extension (une largeur) a réduite dans une direction parallèle à l'axe X, pour faciliter la torsion de la poutre autour de l'axe Y et permettre ainsi à la masse de pivoter autour de son axe de rotation sans trop de résistance.

Les figures 2 et 3 montre un exemple de réalisation d'une telle liaison basé sur ce principe. Dans cet exemple, la liaison comprend quatre poutres de torsions 61aa, 62aa, 63aa, 64aa, qui forment chacune une sorte de paroi, parallèle au plan contenant les axes Y et Z. Les poutres 61aa et 62aa se raccordent chacune (rigidement), d'une part au cadre 3aa, et d'autre part à un ilot central, commun 65aa. De même, les poutres 63aa et 64aa se raccordent chacune, rigidement, d'une part à la masse 4aa (au niveau de son première extrémité « liée »), et d'autre part à l'ilot central 65aa.

Mais ce type de liaison n'est pas complètement satisfaisant. En effet, il est souhaitable que la liaison entre cadre et masse :
- a) soit apte à transmettre une force parallèlement à l'axe Z, en se déformant peu dans cette direction, pour fixer la position en Z de l'une des extrémités (ou en tout cas d'un point donné) de la masse d'épreuve,
- b) soit apte à transmettre une force parallèlement à l'axe X, en se déformant peu dans cette direction, pour que le cadre puisse entraîner la masse avec lui, et
- c) s'oppose le moins possible à une rotation de la masse autour de son axe de rotation (de pivotement), en présentant une raideur la plus petite possible vis-à-vis de cette rotation.

Concernant le critère c), on remarque en effet que les sources de raideur élastique, qui s'opposent à la rotation de la masse d'épreuve 4aa comprennent : la raideur en rotation due à la liaison, ainsi que la raideur de la ou des jauges de contraintes (employées pour mesurer la rotation de la masse d'épreuve autour de son axe de rotation), et éventuellement d'autres sources de raideur s'opposant à une telle rotation. Or il est souhaitable de minimiser la raideur qui n'est pas due aux jauges elles-mêmes, pour qu'un maximum d'énergie soit dirigée vers les jauges afin de maximiser le signal de mesure de rotation (en termes de détection et du point de vue énergétique, il est souhaitable d'éviter d'emmagasiner de l'énergie - sous forme d'énergie élastique - dans la liaison masse-cadre).

Or pour une poutre de torsion comme les poutres 61aa à 64aa, les critères b) et c) sont en partie antagonistes. En effet, pour rendre la poutre très souple en torsion (autour de l'axe Y), on pourrait réduire énormément sa largeur a, mais cela rendrait la poutre très peu rigide vis-à-vis d'un déplacement selon l'axe X.

Plus précisément, une telle poutre s'oppose à un déplacement de son extrémité, dans une direction parallèle à l'axe X, avec un coefficient de raideur en flexion k'_{X} qui est proportionnel à (t_{MEMS}a³)/b³, où b est la longueur de la poutre selon l'axe Y. Et elle s'oppose à une torsion autour de l'axe Y avec un coefficient de raideur en torsion C'_{Y} qui est proportionnel à (t_{MEMS}a³)/b (lorsque a est très petit devant t_{MEMS}). Réduire la largeur a a donc pour effet de réduire la raideur en torsion, mais aussi la raideur en flexion alors qu'il serait souhaitable au contraire de l'augmenter (car elle utile, puisque permettant un entrainement de la masse par le cadre).

Il est possible, dans une certaine mesure, de réduire à la fois la largeur a de la poutre et sa longueur b, pour tenter d'obtenir un coefficient de raideur k'_{X} élevé tout en réduisant C'_{Y} (en effet, le rapport k'_{X}/C'_{Y} est proportionnel à 1/b²). Mais cela amène alors à des valeurs de largeur a très petites qui peuvent poser des problèmes de fabrication, notamment en termes de reproductibilité. En effet, graver un bloc d'une vingtaine de microns de haut (extension selon la direction Z), pour délimiter dans ce bloc une paroi de moins de moins de 1 micron de largeur (extension de la poutre dans la direction X) et de vingt microns de haut (20 microns d'épaisseur) conduit en général à une paroi dont la largeur exacte est difficile à contrôler précisément, cette largeur variant en outre sur la hauteur (i.e. : sur l'épaisseur) de la paroi en question, si bien que les caractéristiques mécaniques de la liaison sont alors difficiles à contrôler.

Pour un gyromètre tel que décrit plus haut, il existe donc un besoin d'une liaison plus performante que la liaison de l'art antérieur décrite ci-dessus, permettant en particulier un meilleur compromis entre
- d'une part, une raideur élevée vis-à-vis d'un déplacement parallèle à la direction de déplacement X et Z du cadre mobile, et
- d'autre part, une souplesse vis-à-vis d'une rotation autour d'un axe parallèle à l'axe de détection du gyromètre (parallèle à l'axe Y).

### RESUME

Pour remédier au moins en partie aux limites de l'art antérieur, la présente technologie concerne alors un dispositif micro-électromécanique comprenant :
- un support,
- un cadre mobile, guidé en translation par rapport au support selon un axe de déplacement parallèle à un plan moyen du support,
- une masse d'épreuve, qui s'étend depuis une première extrémité jusqu'à une deuxième extrémité de la masse d'épreuve,
   - sa première extrémité étant reliée au cadre mobile par une liaison mécanique autorisant un pivotement de la masse, par rapport au cadre, autour d'un axe de rotation qui est parallèle au plan moyen du support et perpendiculaire à l'axe de déplacement du cadre,
   - la masse d'épreuve étant reliée, du côté de sa deuxième extrémité, mobile, à un organe de détection d'un pivotement de la masse d'épreuve autour de son axe de rotation,
- dispositif dans lequel la liaison comprend une paroi mince qui s'étend parallèlement au plan moyen du support, depuis le cadre jusqu'à la première extrémité de la masse d'épreuve, le long d'une ligne moyenne qui est parallèle à l'axe de déplacement du cadre, et qui, selon un axe Z perpendiculaire au plan moyen du support, a une épaisseur inférieure à l'épaisseur de la masse d'épreuve, voire inférieure à un dixième de l'épaisseur de la masse d'épreuve.

La ligne moyenne en question relie le cadre à la première extrémité de la masse d'épreuve. Il s'agit par exemple de la fibre neutre de la paroi qui relie ces deux éléments.

Du fait de sa faible épaisseur selon l'axe Z, cette paroi est très flexible : sa raideur, vis-à-vis d'une flexion autour de l'axe de rotation de la masse d'épreuve (et donc vis-à-vis d'une rotation de la masse autour de cet axe), est très faible.

En revanche, comme cette paroi de raccord s'étend le long d'une ligne moyenne qui est parallèle à l'axe de déplacement du cadre, elle travaille en compression ou en extension, lors de la transmission de mouvements parallèles à cet axe, et elle est donc très rigide vis-à-vis de la transmission de tels mouvements (ou vis-à-vis de la transmission de forces parallèles à cet axe).

Relier la masse au cadre au moyen par une telle paroi permet donc d'obtenir un très bon compromis entre les critères b) et c) mentionnés plus haut.

Plus précisément, pour la transmission de mouvements parallèlement à l'axe de déplacement du cadre, une telle paroi a avec un coefficient de raideur k_{X} (raideur en compression/extension) qui est proportionnel à (1. *ep*)/L, où :
- l est la largeur de la paroi, c'est-à-dire son extension parallèlement à l'axe de rotation de la masse (axe de la liaison),
- ep, notée aussi t_{NEMS} plus loin, est l'épaisseur de la paroi selon l'axe Z, et
- L est la longueur de la paroi, c'est-à-dire son extension parallèlement à l'axe de déplacement du cadre (L correspond par exemple à la distance qui sépare le cadre de la première extrémité de la masse d'épreuve).

En revanche, la raideur de cette paroi vis-à-vis d'une flexion, autour de l'axe de rotation de la masse, est associée à un coefficient de raideur C_{Y} qui est proportionnel à (1. *ep*³)/L. On peut donc obtenir à la fois un coefficient de raideur k_{X} élevé et un coefficient de raideur C_{Y} faible en employant une telle paroi, assez courte (L faible), de section l. *ep* assez importante, et d'épaisseur ep faible. En effet, le rapport k_{X}/C_{Y} est proportionnel à 1/ep² (au lieu de 1/b² dans la liaison de l'art antérieur présentée plus haut), et l'épaisseur ep peut être très faible tout en étant très bien contrôlée puisqu'il s'agit de l'épaisseur d'un élément parallèle au plan moyen du support (parallèle au plan moyen du substrat), issu par exemple d'une couche obtenue par une technologie planaire ou d'une couche Si-top d'un substrat SOI (cette paroi de raccord est typiquement formée dans une couche NEMS du dispositif). Or il est plus facile de maitriser l'épaisseur, la régularité et la reproductibilité d'une telle couche que la « largeur » réduite d'une parois mince et très « haute » (épaisseur importante) obtenue par gravure d'un bloc, perpendiculairement au plan moyen de ce bloc. Cette configuration permet donc, entre autres, de résoudre les difficultés de fabrication mentionnées plus haut (et cette couche de fine épaisseur peut être nécessaire à la réalisation des jauges de mesure par ailleurs)

En plus de la paroi mentionnée ci-dessus, la liaison en question peut comprendre un élément de retenue comportant une paroi de retenue :
- qui est perpendiculaire au plan moyen du support,
- qui, selon une direction parallèle à l'axe de déplacement du cadre, a une extension (appelée largeur dans la suite, pour la paroi de retenue) inférieure à un quart de l'épaisseur de la paroi de retenue selon l'axe Z,
- et qui se raccorde d'une part au cadre mobile, et d'autre part à la première extrémité de la masse d'épreuve.

Comme cette paroi de retenue est parallèle à l'axe Z et présente une hauteur (i.e. : une épaisseur) importante selon l'axe Z, elle est rigide vis-à-vis d'un déplacement d'une de ses extrémités parallèlement à l'axe Z (à la manière d'une règle plate, dont le plan serait vertical, perpendiculaire au plan moyen du support) ; elle permet donc de fixer la position en Z de la première extrémité de la masse d'épreuve, et permet donc de remplir le critère de liaison mécanique a) mentionné plus haut, dans la partie arrière-plan. Cette paroi de retenue évite en particulier une déformation de la paroi de raccord décrite précédemment, sous l'effet des forces parallèles à Z.

Et comme la paroi de retenue est peu épaisse, elle reste souple en torsion, vis-à-vis d'une torsion autour de l'axe de rotation de la masse. A ce sujet, comme la fonction de rigidité selon l'axe X est assurée par la première paroi, mentionnée plus haut (paroi parallèle au plan moyen du support), on peut librement réduire la largeur, ou augmenter la longueur de cette deuxième paroi, de retenue (réduisant ainsi sa raideur en torsion). Et la possible variabilité (difficulté de contrôle) de la largeur de cette paroi de retenue, lorsque cette largeur est très petite, n'est pas problématique ici, justement parce que cette deuxième paroi n'a pas vocation à transmettre des efforts dans la direction X (autrement dit, cette variabilité n'est alors plus un problème car la raideur est tellement réduite qu'elle devient négligeable par rapport aux autres, notamment celle due aux jauges. La variation de quelque chose de négligeable n'a pas de conséquences haut niveau).

L'emploi de ces deux parois minces, l'une parallèle au plan moyen du support, et l'autre perpendiculaire à celui-ci, permet donc de découpler les fonctions de la liaison à réaliser et d'obtenir ainsi un meilleur compromis entre les différentes contraintes a) à c) mentionnées plus haut.

La configuration présentée ci-dessus, dans laquelle les forces parallèles à l'axe X sont transmises par cette première paroi, mince et parallèle au support, apporte de nombreuses améliorations, comme expliqué ci-dessus.

Mais en revanche, cette configuration parait à première vue problématique en termes de détection pour ce dispositif de type capteur inertiel.

En effet, en pratique, la première paroi, parallèle au plan moyen du support, s'étend le plus souvent dans le prolongement soit d'une face inférieure, soit d'une face supérieure de la masse d'inertie. En général, elle s'étend dans le prolongement de la face inférieure de cette masse (face située du côté du support), et elle est issue d'une couche Si-top d'un substrat SOI (tandis que la masse et le cadre lui-même sont gravés dans une couche épaisse déposée sur cette couche Si-top).

Les forces parallèles à l'axe X, transmises par la liaison, sont donc transmises au niveau d'une face inférieure (ou supérieure) de la masse d'épreuve. Ces forces ne passent donc pas par le centre de masse de la masse d'épreuve, et induisent un couple qui a donc tendance à faire tourner cette masse autour de son axe de rotation. En pratique, cet effet indésirable peut être très important, car les efforts transmis parallèlement à l'axe X sont souvent nettement plus importants que les forces, de Coriolis, à détecter (à titre d'illustration, l'amplitude d'oscillation selon l'axe X peut être d'une dizaine de microns, tandis que le déplacement hors plan de l'extrémité libre de la masse d'épreuve est par exemple de l'ordre de 0,1 micron, voire moins).

Cet effet indésirable, dû au couple des forces transmises par la liaison peut néanmoins être compensé, et même annulé par l'emploi d'un deuxième ensemble cadre - masse, symétrique de l'ensemble cadre - masse présenté plus haut, les deux masses d'épreuve étant alors reliées au même organe de détection de pivotement, en l'occurrence un levier, respectivement d'un côté et de l'autre de ce levier.

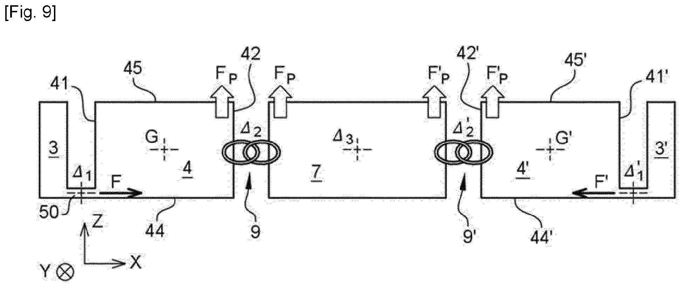

On notera que le fait que cette configuration à double cadre et levier commun permette de compenser ce moment de force indésirable (dû au décalage vertical de l'axe de rotation de la liaison par rapport au centre de gravité de la masse) n'a toutefois rien d'immédiat, et nécessite d'analyser soigneusement les efforts mécaniques en présence, représentés schématiquement sur la figure 9.

Quoi qu'il en soit, on peut prévoir que, le dispositif soit de type gyromètre, le cadre, la masse d'épreuve et la liaison mentionnés plus haut étant appelés respectivement premier cadre, première masse d'épreuve et première liaison, le dispositif comprenant alors, en outre :
- un deuxième cadre mobile, guidé en translation par rapport au support selon ledit axe de déplacement,
- une deuxième masse d'épreuve, qui s'étend depuis une première extrémité jusqu'à une deuxième extrémité de la deuxième masse d'épreuve, ladite deuxième extrémité étant située du côté de la première masse d'épreuve tandis que la première extrémité est située à l'opposé,
- la première extrémité de la deuxième masse étant reliée au deuxième cadre par une deuxième liaison mécanique identique à la première liaison,
- la deuxième masse d'épreuve étant reliée, du côté de sa deuxième extrémité mobile, au même organe de détection de pivotement que la première masse d'épreuve,
- ledit organe de détection étant un levier, mobile en rotation autour d'un axe de rotation de détection qui est parallèle à l'axe de rotation de la première masse d'épreuve, le levier étant relié d'un côté la première masse d'épreuve, et de l'autre à la deuxième masse d'épreuve.

Dans le présent document, le terme « première extrémité », de même que le terme « deuxième extrémité », ne désigne pas nécessairement une extrémité terminale de la masse d'épreuve (c'est-à-dire située tout au bout de la masse d'épreuve et qui termine cette masse d'épreuve). Autrement formulé, la première extrémité peut délimiter la masse d'épreuve dans une zone qui n'est pas située totalement au bout de cette masse (et de même pour la deuxième extrémité). Mais quoiqu'il en soit, les première et deuxième extrémités sont situées à l'opposé l'une de l'autre (i.e. : d'un côté et de l'autre) par rapport au centre de masse (centre de gravité) de la masse d'épreuve. La première extrémité, de même que la deuxième extrémité est par exemple située plus près d'une extrémité terminale de la masse d'épreuve que du centre de masse de la masse d'épreuve. Elle peut aussi correspondre directement à l'extrémité terminale de la masse d'épreuve.

Par ailleurs, par liaison on entend un élément, ou un ensemble d'éléments guidant le mouvement de la masse d'épreuve par rapport au cadre (i.e. : agencés pour articuler la masse avec le cadre).

Par organe de détection, on entend : une pièce mécanique (en pratique, une micropièce) entrainée par la deuxième extrémité de la masse d'épreuve, ou un transducteur électromécanique (par exemple une jauge de contrainte) lié à cette extrémité et dont les caractéristiques électriques varient lors du déplacement de la deuxième extrémité dans une direction parallèle à l'axe Z, ou encore un ensemble comprenant une telle pièce et un tel transducteur.

Par paroi, on entend un élément délimité par deux surfaces libres sensiblement parallèles l'une à l'autre (parallèles à mieux que 15 degrés) et séparées par une distance, plus petite, et même nettement plus petite que les dimensions de ces surfaces libres. Autrement dit, il s'agit d'un élément (pas nécessairement plan) dont l'étendue surfacique est nettement plus grande que la distance entre les deux surfaces libres de la paroi (i.e. : nettement plus grande que l'étendue de l'élément selon une direction transverse).

Dans le présent document, pour la première paroi comme pour la deuxième paroi, le terme « épaisseur » désigne l'extension de la paroi selon la direction Z, perpendiculaire aux couches (perpendiculaire au substrat).

D'autre part, dans le présent document, on entend par « parallèle » (et par « perpendiculaire ») : parallèle (ou, respectivement, perpendiculaire) à mieux que 15 degrés, voire à mieux que 5 ou même 1 degrés.

Outre les caractéristiques mentionnées ci-dessus, le dispositif qui vient d'être présenté peut comporter une ou plusieurs des caractéristiques optionnelles suivantes, considérées individuellement ou selon toutes les combinaisons techniquement envisageables :
- l'épaisseur de ladite paroi, parallèle au plan moyen du support, est inférieure à un trentième de l'épaisseur de la masse d'épreuve ; ladite paroi se raccorde au cadre le long d'une ligne de raccord qui est parallèle à l'axe de rotation de la masse d'épreuve ; ladite paroi se raccorde à la masse d'épreuve le long d'une autre ligne de raccord qui est elle aussi parallèle à l'axe de rotation de la masse d'épreuve ; ladite paroi est délimitée latéralement, d'un côté et de l'autre, par deux bords libres qui s'étendent chacun depuis le cadre jusqu'à la masse d'épreuve ; chacun de ces deux bords libres est parallèle à l'axe de déplacement du cadre ; aucun de ces deux bords n'est parallèle à l'axe de rotation de la masse d'épreuve ;
- la masse d'épreuve est délimitée par une face inférieure, située du côté du support, et, de l'autre côté, par une face supérieure ; ladite parois, parallèle au plan moyen du support, s'étend dans le prolongement de la face inférieure de la masse d'épreuve ;
- le dispositif comprend un actionneur micro-électromécanique configuré pour imposer au cadre mobile une oscillation selon ledit axe de déplacement ;
- la masse d'épreuve définit un plan moyen, qui est parallèle au plan moyen du support lorsque la masse est au repos ;
- le support du dispositif est formé par une couche, par exemple en matériau semi-conducteur, plus épaisse que le cadre ou la masse d'épreuve ; le plan moyen du support est le plan défini par cette couche ;
- la paroi de retenue est plane ; la paroi de retenue est perpendiculaire à l'axe de déplacement du cadre mobile ;
- la paroi de retenue est délimitée, du côté du support, par un bord inférieur, libre, et, à l'opposé, par un bord supérieur, libre également.
- l'extension de la paroi de retenue selon une direction parallèle à l'axe (X) de déplacement du cadre est inférieure à un dixième, voire un vingtième d'une longueur, présentée par cette paroi selon une direction parallèle audit axe de rotation, entre un point de raccordement au cadre mobile et un point de raccordement à la masse d'épreuve ;
- l'extension de la paroi de retenue selon une direction parallèle à l'axe (X) de déplacement du cadre est inférieure à un dixième de son épaisseur (de sa hauteur) ;
- la paroi de retenue s'étend dans une direction parallèle à l'axe de rotation de la masse d'épreuve, depuis une première extrémité jusqu'à une deuxième extrémité de la paroi de retenue, et :
   - la première extrémité et la deuxième extrémité de la paroi de retenue sont raccordées toutes deux au cadre mobile, tandis que la masse d'épreuve se raccorde à la paroi de retenue dans une zone médiane de ladite paroi, entre ces deux extrémités,
   - ou, la première extrémité et la deuxième extrémité de la paroi de retenue sont raccordées toutes deux à la masse d'épreuve, tandis que le cadre se raccorde à la paroi de retenue dans une zone médiane de ladite paroi, entre ces deux extrémités,
- la paroi de retenue s'étend dans une direction parallèle à l'axe de rotation de la masse d'épreuve, depuis une première extrémité jusqu'à une deuxième extrémité de la paroi de retenue, la première extrémité de la paroi de retenue étant raccordée au cadre mobile tandis que sa deuxième extrémité est raccordée à la masse d'épreuve, ou inversement ;
- le dispositif comprend au moins une paroi de retenue supplémentaire, qui est perpendiculaire au plan moyen du support, qui a, selon une direction parallèle à l'axe de déplacement du cadre, une extension inférieure à un quart de l'épaisseur de la paroi de retenue selon l'axe Z, et qui s'étend, dans une direction parallèle à l'axe de rotation de la masse d'épreuve, depuis une première extrémité jusqu'à une deuxième extrémité de la paroi de retenue supplémentaire, la première extrémité de la paroi de retenue supplémentaire étant raccordée au cadre mobile tandis que sa deuxième extrémité est raccordée à la masse d'épreuve, ou inversement ;
- la paroi de retenue et la paroi de retenue supplémentaire sont symétriques l'une de l'autre, par rapport à un plan de symétrie du cadre et de la masse d'épreuve, plan de symétrie parallèle au plan X,Z ;
- ladite paroi, parallèle au plan moyen du substrat, est formée par une portion d'une couche supérieure mince en silicium d'un substrat SOI en silicium sur isolant, et le support du dispositif est formé par une couche support épaisse dudit substrat SOI ;
- sur la majeure partie de son épaisseur, la masse d'épreuve est formée de silicium, (qui peut être polycristallin, ou monocristallin, déposé sur ladite couche supérieure mince en silicium) ;
- ladite couche supérieure mince du substrat SOI est essentiellement monocristalline ;
- la liaison reliant le levier de détection à la première masse d'épreuve, et la liaison reliant le levier de détection à la deuxième masse d'épreuve sont situées à l'opposé l'une de l'autre par rapport à l'axe de rotation de détection ;
- le dispositif comprend un système d'actionnement électromécanique configuré pour imposer à chacun des cadres mobiles une oscillation selon ledit axe de déplacement, le déplacement du premier cadre par rapport au support, et le déplacement du deuxième cadre par rapport au support ayant une même amplitude et des sens opposés l'un à l'autre.

La présente technologie et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif.
[Fig. 1] représente schématiquement un gyromètre à deux cadres mobiles de l'art antérieur.
[Fig. 2] représente schématiquement une liaison mécanique du gyromètre de la figure 1, cette liaison reliant l'un des cadres mobiles à une masse d'épreuve du gyromètre, cette liaison étant représentée en perspective et dans une situation où le cadre tire sur la masse d'épreuve pour l'entrainer dans son mouvement.
[Fig. 3] représente schématiquement la liaison de la figure 2, vue de dessus.
[Fig. 4] est une représentation schématique en perspective d'un gyromètre à deux cadres mobiles mettant en oeuvre la présente technologie.
[Fig. 5] représente schématiquement une partie du gyromètre de la figure 4, vu de côté.
[Fig. 6] est une représentation schématique en perspective d'une liaison mécanique du gyromètre de la figure 4, cette liaison reliant l'un des cadres mobiles à l'une masse d'épreuve du gyromètre.
[Fig. 7] est une représentation schématique partielle de la liaison de la figure 6, vue en coupe selon un plan de coupe AA repéré sur la figure 8.
[Fig. 8] est une représentation schématique de la liaison de la figure 6, vue de dessus.
[Fig. 9] représente schématiquement des efforts transmis par les liaisons du gyromètre de la figure 4.

### DESCRIPTION DETAILLEE

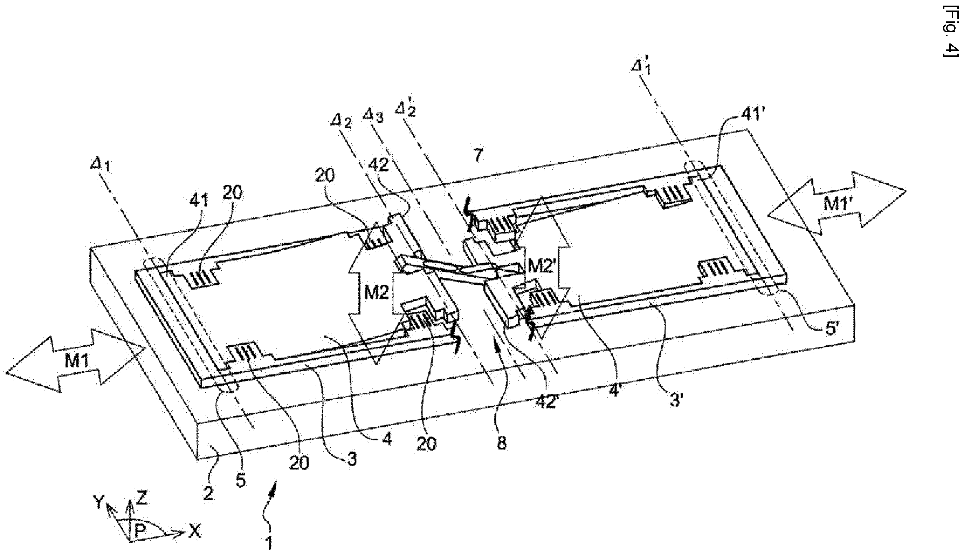

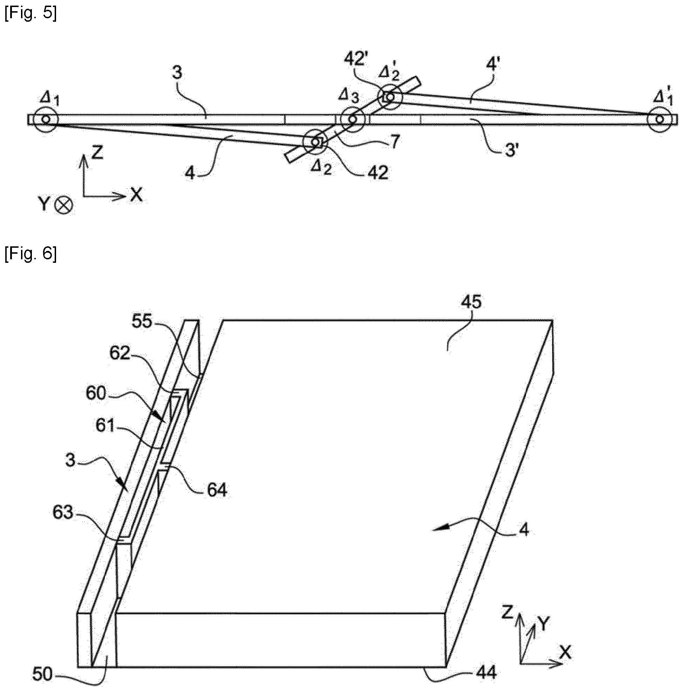

Les figures 4 et 5 montrent un dispositif 1, de type gyromètre, mettant en oeuvre la présente technologie. Ce gyromètre 1 est un gyromètre à double cadre et à mouvement hors-plan, qui permet de mesurer une vitesse de rotation autour d'un axe Y parallèle au plan moyen du substrat à partir duquel est réalisé le gyromètre 1.

La majeure partie de ce substrat forme une couche, épaisse, qui sert de support 2.

Le gyromètre 1 comprend deux cadres mobiles 3 et 3' guidés chacun en déplacement, par rapport à ce support 2, selon un axe X qui est parallèle au plan moyen P du support, plan moyen qui est aussi le plan moyen du gyromètre lui-même, globalement plan. L'axe de déplacement des cadres, X, est par ailleurs perpendiculaire à l'axe de mesure de vitesse angulaire de rotation, Y. L'axe de déplacement des cadres, X, et l'axe de mesure de vitesse angulaire, Y, sont reportés sur les différentes figures, de même qu'un axe Z, perpendiculaire au plan moyen du support (perpendiculaire à X et Y).

Pour chaque cadre, le guidage du cadre par rapport au support est obtenu par exemple grâce à quatre ressorts 20, disposés en quatre points du cadre éloignés les uns des autres, chaque ressort 20 reliant le cadre au support en autorisant un déplacement relatif parallèlement à l'axe X. Les ressorts 20 comprenant ici des lames travaillant en flexion, qui relient le support 2 au cadre considéré 3, 3'. Les cadres 3 et 3' ont une forme d'ensemble rectangulaire, ici.

Lors du fonctionnement du gyromètre, les deux cadres sont mis en mouvement, par exemple par actionnement électrostatique au moyen de peignes interdigités (non représentés), de manière à osciller parallèlement à l'axe X, en opposition de phase l'un par rapport à l'autre (de manière symétrique). Les deux cadres ont alors des directions de déplacement, par rapport au support 2, qui sont opposées l'une à l'autre.

Les deux cadres 3 et 3' sont agencés en vis-à-vis l'un de l'autre, de part et d'autre d'une portion centrale 8, fixe (i.e. : sans mouvement par rapport au support 2) du gyromètre. Sur la figure 4, le détail de cette portion centrale 8 n'est pas représenté, pour ne pas encombrer la figure. Autrement formulé, la figure 4 est une vue partielle. La limite entre parties non-représentées et parties représentées est repérée sur la figure par des trois coutres lignes ondulées, en trait épais.

Chaque cadre 3, 3' entraine avec lui une masse d'épreuve 4, 4' (appelée aussi masse Coriolis), qui est reliée au cadre par une liaison 5, 5' qui autorise un pivotement de la masse d'épreuve autour d'un axe de rotation Δ₁, Δ'₁ parallèle à l'axe Y. Cette liaison s'apparente en partie à une liaison pivot, ou, autrement dit, à une charnière. Comme on le verra plus bas, la liaison 5, 5' est très rigide vis-à-vis de déplacements relatifs entre la masse et le cadre dirigés selon l'axe X. Du fait de ce fort couplage, on obtient, pour le mouvement d'oscillation de chaque ensemble masse - cadre, par rapport au support, parallèlement à l'axe X, quasiment une seule fréquence de résonance, comprise typiquement entre 1 et 100 kHz (voire entre 5 et 50 kHz).

Comme on peut le voir sur la figure 4, chaque masse 4, 4' d'épreuve a ici une forme d'ensemble qui est celle d'une plaque (approximativement parallélépipédique), parallèle au plan moyen P du support 2 lorsque la masse est au repos. Cette plaque est entourée par le cadre correspondant, sur la majeure partie de son périmètre. Chaque masse 4, 4' s'étend d'une première extrémité 41, 41' jusqu'à une deuxième extrémité 42, 42'. L'axe moyen de la masse d'épreuve 4, 4', qui relie sa première extrémité à sa deuxième extrémité, est parallèle à l'axe de déplacement, X. Chaque masse 4, 4' est délimitée, du côté du support 2, par une surface inférieure 44, 44' (parallèle au support lorsque la masse est au repos) et, à l'opposé, par une surface supérieure 45, 45'.

La première extrémité 41, 41' est reliée au cadre 3, 3' par la liaison 5, 5' en question, tandis que la deuxième extrémité 42, 42' de la masse peut se déplacer « hors plan », selon une direction parallèle à l'axe Z, lorsque la masse 4, 4' pivote autour de son axe de rotation Δ₁, Δ'₁.

Pour chaque masse 4, 4', la première extrémité 41, 41' est située, par rapport au reste de la masse d'épreuve 4, 4', à l'opposé de l'autre masse d'épreuve 4', 4 (et donc à l'opposé de l'autre cadre 3'). Tandis que la deuxième extrémité 42, 42', est située au contraire du côté de l'autre masse d'épreuve 4', 4 quasiment en vis-à-vis de l'autre masse, dans une zone centrale du gyromètre 1. En d'autres termes, chaque masse d'épreuve 4, 4' est reliée à son cadre 3, 3' (par la liaison 5, 5') du côté en quelque sorte externe du cadre, d'un côté de cette masse situé à l'opposé de l'autre masse d'épreuve 4', 4.

Chaque masse d'épreuve 4, 4' est reliée, du côté de sa deuxième extrémité 42, 42', à un levier de détection de rotation, commun, 7. Ce levier 7 pivote autour d'un axe de détection Δ₃, qui est parallèle à l'axe Y et qui est fixe par rapport au support 2. Le levier 7 est situé dans la zone centrale du gyromètre, entre les deux masses d'épreuve.

Lorsque le gyromètre 1 tourne (i.e. : lorsque le support 2 tourne) par rapport à un référentiel inertiel, par exemple par rapport au référentiel géocentrique, autour de l'axe Y, avec une vitesse angulaire Ω̅ = Ωy̅, chaque masse 4, 4' subit alors une force de Coriolis, qui s'exprime comme F̅*_{cor}* = 2 *m_{cor}* (*vx̅*) Λ (Ωy̅) où m_{cor} représente la masse de l'une quelconque des masses d'épreuve 4, 4' et où v est sa vitesse de déplacement (selon l'axe X). Cette force est donc dirigée selon l'axe Z et elle est de même amplitude mais de sens opposé pour les deux masses d'épreuve 4 et 4' (puisque les deux masses sont entrainées en sens opposés). Pour chacune de ces deux masses, cette force entraine donc un déplacement de sa deuxième extrémité 42, 42', selon l'axe Z (ou, autrement formulé, un pivotement de la masse autour de son axe de rotation Δ₁, Δ'₁), dans un sens opposé pour les deux masses 4, 4', ce qui fait alors tourner le levier de détection 7 autour de l'axe de détection Δ₃ (voir la figure 5). Cette rotation du levier est mesurée, ici grâce à des jauges de contrainte (piézorésistives, piézo-électriques, ou détection résonante) pour en déduire la vitesse angulaire Ω.

Sur les figures 4 et 5, l'amplitude de déplacement selon l'axe Z est exagérée (i.e. : ce déplacement n'est pas représenté à l'échelle), pour le rendre bien visible. En pratique, l'amplitude d'oscillation des cadres, selon l'axe X, est de l'ordre d'une dizaine de microns (ce qui est très élevé, pour un MEMS), tandis que le déplacement, selon l'axe Z, des deuxièmes extrémités des masses est par exemple de l'ordre de 0,1 micron. Sur ces figures, le déplacement des cadres et des masses selon l'axe X est représenté schématiquement par les doubles flèches M1 et M1', tandis que le déplacement selon l'axe Z des deuxièmes extrémités des masses est schématisé par les doubles flèches M2 et M2'.

Chaque liaison 5, 5' présente une certaine raideur, s'opposant à une rotation de la masse d'épreuve correspondante 4, 4' autour de l'axe Δ₁, ou Δ'₁. A cette raideur en rotation s'ajoute la raideur des jauges de contrainte et la raideur en rotation de la liaison 9, 9' entre la masse 4, 4' et le levier 7. Le mouvement de rotation de la masse 4, 4' autour de son axe de rotation Δ₁, Δ'₁ est associé à une fréquence de résonance, choisie par exemple de manière à être proche de (légèrement supérieure, par exemple de 1 à 10%, à) la fréquence de résonance de l'ensemble cadre-masse dans son oscillation parallèlement à X. Cela permet d'obtenir un signal de mesure de la vitesse angulaire Ω plus grand.

Quoiqu'il en soit, l'architecture d'ensemble du gyromètre, avec deux masses d'épreuve 4 et 4' qui oscillent de manière symétrique et qui actionnent le même levier de détection 7 de rotation, est particulièrement intéressante car elle permet une détection différentielle de la vitesse angulaire de rotation Ω, ce qui améliore beaucoup le rapport signal sur bruit de ce gyromètre 1. En effet, les vibrations mécaniques éventuelles auxquelles peut être soumis le gyromètre 1, par exemple dans la direction X ou dans la direction Z, ont la même influence sur la masse 4 et sur la masse 4'. En d'autres termes, elles entrainent un déplacement, parasite, qui est identique pour ces deux masses (par exemple dans le sens +Z pour les deux masses), et qui est donc sans influence sur le levier de détection 7 (i.e. : n'entraine pas de pivotement de ce levier). Cette architecture permet donc une réjection efficace de ces vibrations parasites, directement au niveau de l'organe mécanique de détection 7, avant même la conversion électromécanique par les jauges.

Le fait, pour chaque masse, de découpler la liaison 5, 5' d'une part, et l'organe de détection de rotation de la masse, 7, d'autre part (les deux étant agencés respectivement à deux extrémités différentes de la masse), permet de configurer chacun de ces deux éléments indépendamment l'un de l'autre, avec beaucoup de liberté.

Les liaisons 5 et 5' sont maintenant décrites plus en détail. Ces deux liaisons sont ici identiques, si bien que seule la liaison 5 est décrite en détail (en référence aux figures 6 à 8).

Cette liaison 5 comprend au moins :
- une première paroi 50, appelée aussi paroi de raccord, ou paroi de transmission, parallèle au plan moyen P du support 2 ; cette paroi permet que le cadre 3 entraine la masse 4 avec lui, avec une rigidité élevée dans la direction X, et
- une deuxième paroi, 61, appelée aussi paroi de retenue, perpendiculaire au plan moyen du support, et qui fixe la position en Z de la première extrémité 41 de la masse d'épreuve.

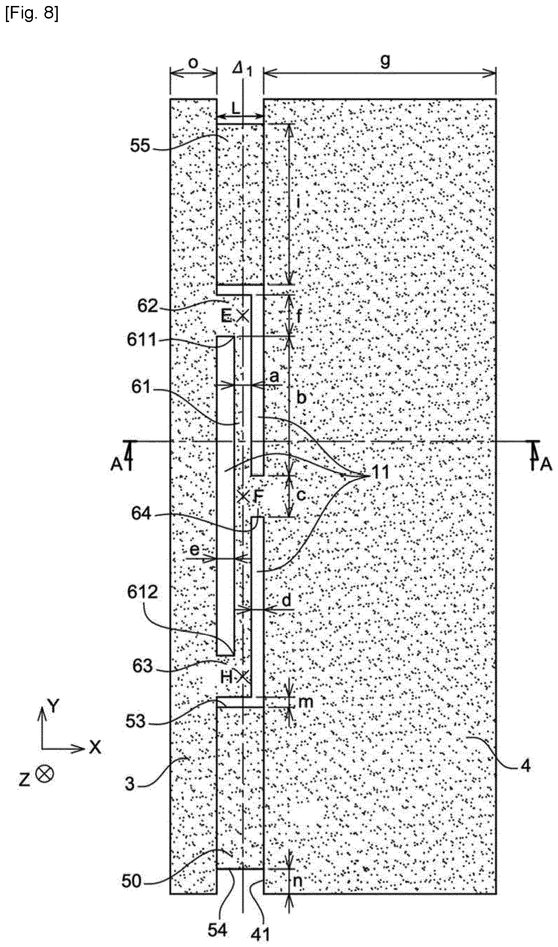

Comme on peut le voir sur la figure 8, la liaison 5 comprend aussi une troisième paroi 55, parallèle au plan moyen du substrat. La liaison comprend ainsi deux parois de transmission (en quelque sorte comme si cette paroi était divisée en deux parties, au lieu d'être d'un seul tenant). En variante, la liaison pourrait d'ailleurs comprendre un nombre différent de parois de transmission, ou de parois de retenue. Ainsi, dans l'exemple de la figure 8, la liaison 5 comprend une seule paroi de retenue (la paroi 61). Mais, en variante, elle pourrait comprendre deux parois de retenue distinctes, ou même plus de deux, l'ensemble des parois de retenue étant avantageusement symétrique par rapport à un plan de symétrie qui est parallèle aux axes X et Z (et qui est aussi un plan de symétrie pour la masse et le cadre). Chacune de ces parois de retenue est mince (au sens donné plus bas pour la paroi 61), parallèle à l'axe Z, perpendiculaire à l'axe X, et elle se raccorde d'une part au cadre, et d'autre part à la masse d'épreuve.

Les première, deuxième et troisième parois 50, 61 et 55 relient chacune la première extrémité 41 de la masse 4, au cadre 3, plus précisément à une partie de ce cadre qui correspond à l'un des côtés de ce cadre rectangulaire, côté qui est parallèle à l'axe Y. Ces trois parois relient ainsi :
- une face, présentée par cette partie du cadre, et qui est perpendiculaire à l'axe X,
- à la première extrémité 41 de la masse 4, première extrémité qui forme une face d'extrémité, perpendiculaire elle aussi à l'axe X (ces deux faces étant séparées par une sorte de fente).

Les parois 50 et 55 ont chacune une épaisseur notée t_{NEMS}. Il s'agit de leur extension parallèlement à l'axe Z. Cette épaisseur est inférieure, et même nettement inférieure à l'épaisseur t_{MEMS} de la masse d'épreuve (extension de la masse d'épreuve selon l'axe Z). L'épaisseur t_{NEMS} de ces parois peut par exemple être inférieure à un dixième, et même à un trentième de l'épaisseur t_{MEMS} de la masse d'épreuve. t_{NEMS} est par exemple inférieure à 2 microns, voire à 1 micron ou même à 0,5 micron. Quant à t_{MEMS}, elle est par exemple comprise entre 5 et 100 microns, ou entre 15 et 50 microns.

Les parois 50 et 55 s'étendent chacune dans le prolongement de la face inférieure 44 de la masse d'épreuve 4.

Les parois 50 et 55 peuvent, être formées chacune par une portion d'une couche supérieure 12 mince en silicium d'un substrat SOI, en silicium sur isolant, à partir duquel est fabriqué le gyromètre.

Un tel substrat SOI comprend une couche support, épaisse (en général au moins 100 microns d'épaisseur, généralement plus), recouverte par une couche isolante, généralement en oxyde de silicium, elle-même recouverte par la couche supérieure mince, en silicium, souvent appelée couche Si-top. Cette couche Si-top, a, par fabrication, une épaisseur réduite (par exemple de 250 nm) et très bien contrôlée. Elle est donc propice à la réalisation des parois de transmission 50 et 55. Elle est par ailleurs essentiellement monocristalline, et donc propice à la réalisation de jauges piézorésistives. Ici, les jauges sont d'ailleurs réalisées dans cette couche 12. Lors de la fabrication du gyromètre, une couche supplémentaire de silicium (plus généralement, de matériau semi-conducteur), assez épaisse, d'épaisseur h = t_{MEMS} -t_{NEMS}, est déposée sur la couche 12, pour former l'essentiel des masses d'épreuve et des cadres (d'épaisseur totale t_{MEMS}). Cette couche supplémentaire peut être polycristalline ou monocristalline, et son épaisseur h est de typiquement de quelques microns ou dizaines de microns. Lors de la fabrication du gyromètre, la couche 12 et cette couche supplémentaire sont gravées pour définir les différents éléments du gyromètre. La couche d'oxyde de silicium mentionnée plus haut, située sous la couche NEMS 12, est retirée (par attaque chimique) notamment sous les parties du gyromètre qui sont mobiles par rapport au support (cadres et masses d'épreuve notamment), pour libérer ces parties mobiles. Après fabrication, la couche support, épaisse, du substrat SOI forme le support 2 du gyromètre.

On remarque que les parois 50 et 55 sont obtenues en quelques sorte en découpant latéralement la couche 12. Leur épaisseur est donc fixée par l'épaisseur, initiale, de la couche 12 ; cette épaisseur réduite ne résulte donc pas d'un affinement ou d'une gravure locale d'une couche plus épaisse (autrement dit, elle n'est pas obtenue par gravure partielle. Son épaisseur est donc très bien maitrisée, et une éventuelle « surgravure » des bords n'a qu'une influence limitée sur la raideur de la liaison mécanique).

La troisième paroi 55 est ici identique à la première paroi 50, si bien que seule la géométrie de la première paroi est décrite maintenant plus en détail.

Cette première paroi 50 s'étend, depuis le cadre 3 jusqu'à la première extrémité 41 de la masse d'épreuve, le long d'une ligne moyenne qui est parallèle à l'axe X. La ligne moyenne en question relie le cadre 3 à la première extrémité 41 de la masse d'épreuve 4 (cette ligne moyenne correspond par exemple à la ligne (pas nécessairement rectiligne) qui passe par les centres des différentes sections droites de la paroi 50). La jonction entre la première paroi 50 et le cadre 3 correspond à une surface de raccord rectangulaire, très allongée, qui s'étend parallèlement à l'axe de rotation Δ₁ de la masse d'épreuve 4. La jonction entre la première paroi 50 et la masse d'épreuve 4 correspond elle aussi à une surface de raccord rectangulaire, très allongée, qui s'étend parallèlement à l'axe de rotation de la masse d'épreuve. La première paroi 50 est délimitée latéralement, d'un côté et de l'autre, par deux bords 53, 54, libres (c'est-à-dire qui ne sont pas liés, en tout cas pas directement, à un autre élément), qui s'étendent chacun depuis le cadre 3 jusqu'à la masse d'épreuve 4. Chacun de ces deux bords libres, 53, 54 est parallèle à l'axe de déplacement du cadre, X (et aucun de ces deux bords n'est parallèle à l'axe de rotation de la masse d'épreuve).

La première paroi 50 a une longueur L, selon l'axe X (il s'agit de la distance entre le côté du cadre 3 relié à la masse 4, et la première extrémité 41 de cette masse). En pratique, elle est comprise par exemple entre 5 et 50 microns, et elle est choisie plutôt courte, si possible (pour augmenter le coefficient de raideur k_{X}, présenté dans la partie « résumé »). Comme déjà indiqué, la largeur de la paroi 50, c'est-à-dire son extension parallèlement à l'axe de rotation de la masse (axe de la liaison 5), est notée I. Elle est comprise par exemple entre 5 et 200 microns (plus généralement, la somme des largeurs des différentes parois de transmission (ici 50 et 55) est comprise entre 10 et 500 microns), et est choisie grande si possible, pour augmenter le coefficient de raideur k_{X}. On notera que, dans le présent document, par convention, pour la première paroi de la liaison 5, 5' (i.e. : pour la paroi de faible épaisseur t_{MEMS}, et qui est parallèle au plan des couches), le terme « longueur » (en l'occurrence la longueur L) désigne l'extension de la première paroi selon une direction parallèle à l'axe X de déplacement des cadres, tandis que le terme « largueur » (en l'occurrence la largeur l) désigne son extension selon une direction parallèle à l'axe de rotation Y. On notera à ce sujet que la distance (L), appelée ainsi longueur de la première paroi, peut être plus petite que la distance (l) appelée largeur de la première paroi. Par ailleurs, cette convention lexicale concerne la première paroi, mais pas forcément les autres parois du dispositif (en particulier pas la paroi de retenue).

La deuxième paroi 61, de retenue, et l'élément de retenu 60 dont elle fait partie sont maintenant décrits plus en détail.

La deuxième paroi 61 se raccorde d'une part au cadre 3, et d'autre part à la première extrémité 41 de la masse d'épreuve 4. Cette paroi est plane, ici. Elle est perpendiculaire à l'axe X. Cette paroi est mince : sa largeur a (extension selon l'axe X) est inférieure à un quart, et même à un dixième de son épaisseur h. Sa largeur a est par ailleurs inférieure à un dixième, voire un trentième d'une longueur, b, présentée par cette paroi selon une direction parallèle à l'axe de rotation Δ₁, entre un point de raccordement (E) au cadre mobile 3 et un point de raccordement (F) à la masse d'épreuve 4. La largeur a est par exemple comprise entre 0,5 et 5 microns (et est généralement inférieure à 2 microns). La longueur b est comprise par exemple entre 10 à 100 microns, et la hauteur h est comprise typiquement entre 5 et 100 microns.

La paroi de retenue 61 s'étend, parallèlement à l'axe Y, depuis une première extrémité 611 jusqu'à une deuxième extrémité 612. Ces deux extrémités sont raccordées ici au cadre 3 (respectivement par une première paroi de raccord 62, courte, et par une deuxième paroi de raccord 63, courte, également appelés éléments de raccord), toutes deux parallèles à l'axe Z. La masse d'épreuve 4 se raccorde quant à elle à la paroi de retenue 61 dans une zone médiane de cette paroi, située entre les deux extrémités 611 et 612 (à mi-distance de ces deux extrémités), là aussi par l'intermédiaire d'une paroi de raccord 64, courte, parallèle à l'axe Z.

En variante, la paroi de retenue pourrait se raccorder différemment au cadre mobile et la masse d'épreuve. A titre d'exemple, ses deux extrémités pourraient être raccordées à la masse, le cadre se raccordant alors à une partie médiane de la paroi (au lieu de l'inverse). Et, comme indiqué plus haut, la liaison pourrait comprendre plusieurs parois de retenue, minces, perpendiculaires à l'axe X.

La paroi de retenue 61 est délimitée, du côté du support, par un bord inférieur, libre, et, à l'opposé, par un bord supérieur, libre également.

L'élément de retenue 60, qui comprend la paroi de retenue 61 et les trois éléments de raccord 62, 63, 64, n'est pas en contact avec les parois de transmission 50 et 55. L'élément de retenue 60 est réalisé par gravure :
- de la couche supplémentaire en silicium mentionnée précédemment, sur toute la hauteur de cette couche,
- ainsi que de la couche NEMS 12 située en dessous (à moins que cette couche n'ai été préalablement retirée, dans cette zone).

Cette gravure produit ainsi des ouvertures 11 (en forme de fentes assez étroites) qui s'étendent sur toute la hauteur de la masse d'épreuve.

Ici, du côté de la première extrémité 41, la masse d'épreuve 4 et le cadre 3 sont reliés l'un à l'autre seulement par les parois de transmission (50 et 55) et par l'élément de retenue 60.

Comme expliqué dans la partie « résumé », cette liaison 5 basée sur au moins deux parois minces, l'une, 50, parallèle au plan moyen du support, et l'autre, 61, perpendiculaire à celui-ci, permet d'obtenir une liaison très raide dans la direction de déplacement du cadre (axe X), et aussi très raide dans la direction Z , définissant ainsi l'axe de rotation de la masse d'épreuve 4 par rapport au cadre 3 (axe Δ₁), tout en étant souple, de raideur réduite, vis-à-vis d'une rotation autour de cet axe.

A ce sujet, on rappelle que la paroi de retenue 61, du fait de sa hauteur importante (selon l'axe Z), couple la masse au cadre avec une raideur très forte en Z, et contribue ainsi à définir un axe de rotation (pas de mouvement autre qu'une rotation) entre les deux pièces, cet axe étant en l'occurrence l'axe Δ₁ . Cette paroi impose aux points E, F et H repérés sur la figure 8 d'avoir la même, ou quasiment la même position en Z (ces trois points étant situés respectivement au niveau de l'élément de raccord 62, de l'élément de raccord 64 et de l'élément de raccord 63, sur la face supérieure libre de l'élément de retenue 60).

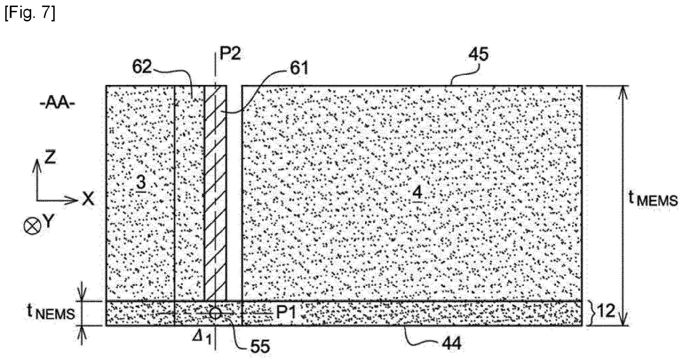

Comme les parois 50, 55 et 61 sont minces (au sens défini plus haut), très rigides dans la direction X pour les parois 50 et 55, et très rigide dans la direction Z pour la paroi 61, l'axe de rotation Δ₁ est situé ici à l'intersection entre (figure 7) :
- un plan P1 qui est le plan moyen des parois 50, 55 (et qui est parallèle au plan P), et
- un plan P2 qui est le plan moyen de la paroi 61.

Cet axe de rotation est donc situé ici au niveau de la couche NEMS 12 (très faible rigidité en torsion de la paroi 61).

La figure 9 représente schématiquement le gyromètre 1, en quelque sorte sous forme fonctionnelle, en montrant certaines forces qui s'exercent dans les liaisons du gyromètre. Comme les cadres 3 et 3' sont actionnés en opposition de phase l'un par rapport à l'autre :
- la force F transmise par la liaison 5 du fait que le cadre 3 entraine avec lui la masse 4 (force qui est parallèle à X),
- est de même amplitude mais opposée à la force F', transmise par la liaison 5' du fait que le cadre 3' entraine avec lui la masse 4'.

Ces deux forces F et F' s'exercent sur les masses 4 et 4' quasiment au niveau de leurs faces inférieures 44 et 44'. Elles s'exercent donc sur ces masses avec un bras de levier non nul par rapport au centre de masse, G, G' de la masse considérée, et ont donc tendance à faire pivoter cette masse autour de son axe de rotation, possiblement beaucoup plus que la force de Coriolis à détecter. Mais cet effet indésirable est contrecarré par l'utilisation du levier commun 7.

En effet, en termes de forces, ce moment non nul des forces F et F' se traduit, au niveau des liaisons 9 et 9', par des forces Fp et F'p dirigée toutes deux selon l'axe +Z, et de même amplitude. Les liaisons 9 et 9' sont les liaisons qui relient, respectivement la masse 4 et la masse 4', au levier 7. Or ces liaisons, qui ont pour but de transmettre au levier des déplacements parallèles à l'axe Z, transmettent ces forces Fp et Fp' sans quasiment les modifier. Le levier de détection 7 se trouve ainsi soumis, au niveau de ses deux extrémités opposées, à deux forces Fp et F'p égales, si bien que l'ensemble de ces deux forces n'a pas tendance à faire tourner le levier 7 autour de son axe de rotation Δ₃ (situé au milieu du levier, et fixe par rapport au support). Finalement, même si les forces transmises dans les liaisons 5 et 5' ont un bras de levier non nul par rapport aux centres de masse G et G' des masses d'épreuves, elles ne perturbent pas la mesure de la vitesse angulaire Ω, dans ce dispositif.

Un exemple numérique complet est présenté maintenant, à titre d'illustration. Les dimensions des différents éléments de la liaison 5 sont repérées sur la figure 8. Les valeurs de ces dimensions sont données dans le tableau 1, en microns.

Les valeurs des coefficients de raideur k_{X} et C_{Y} correspond à ce dimensionnement, valeurs obtenues par simulation numérique, sont données dans le tableau 3.

Un exemple numérique correspond à la liaison de l'art antérieur, de la figure 3, est présenté aussi à titre de comparaison. Les dimensions des différents éléments de cette liaison sont repérées sur la figure 3. Les valeurs de ces dimensions sont données dans le tableau 2, en microns. Les valeurs des coefficients de raideur k'_{X} et C'_{Y} correspond à ce dimensionnement, obtenues par simulation numérique, sont données dans le tableau 3.

**[Tab. 1]**

| Tableau 1 | |
|---|---|
| a | 1.7 |
| b | 100 |
| c | 10 |
| d | 3.6 |
| e | 3.6 |
| f | 10 |
| g | 120 |
| l | 100 |
| m | 2 |
| n | 2 |
| o | 5 |
| P | 1 |
| t_{MEMS} | 20 |
| t_{NEMS} | 0.25 |

**[Tab. 2]**

| Tableau 2 | |
|---|---|
| a | 4.15 |
| b | 30 |
| c | 12 |
| d | 13 |
| e | 5 |
| f | 15 |
| 9 | 120 |
| t_{MEMS} | 20 |

**[Tab. 3]**

| Tableau 3 | | | |
|---|---|---|---|
| raideurs | Art antérieur (figure 3) | Exemple de mise en oeuvre de la présente technologie (figure 8) | rapport |
| Raideur en x, en N/m | 5.10³ | 6,2 .10⁵ | 120 fois plus grande |
| Raideur en rotation (rotation autour de Δ₁, parallèle à Y), en N.m/rd | 1,4 .10⁻⁶ | 5,9 .10⁻⁸ | 24 fois plus petite |

Comme on peut le constater sur cet exemple, la nouvelle configuration de liaison présentée ici permet à la fois d'augmenter la raideur en x, tout en réduisant substantiellement la raideur en rotation autour de l'axe de rotation de la masse considérée (et tout en facilitant la fabrication/reproductibilité du dispositif).

## Revendications

1. Dispositif (1) micro-électromécanique comprenant :
- un support (2),
- un cadre (3) mobile, guidé en translation par rapport au support selon un axe (X) de déplacement parallèle à un plan moyen (P) du support,
- une masse (4) d'épreuve, qui s'étend depuis une première extrémité (41) jusqu'à une deuxième extrémité (42) de la masse d'épreuve,
o sa première extrémité (41) étant reliée au cadre mobile par une liaison (5) mécanique autorisant un pivotement de la masse, par rapport au cadre, autour d'un axe de rotation (Δ₁) qui est parallèle au plan moyen (P) du support et perpendiculaire à l'axe (X) de déplacement du cadre,
∘ la masse d'épreuve étant reliée, du côté de sa deuxième extrémité (42), mobile, à un organe de détection (7) d'un pivotement de la masse d'épreuve autour de son axe de rotation,
- **caractérisé en ce que** ladite liaison (5) comprend :
∘ une paroi (50) mince qui s'étend parallèlement au plan moyen (P) du support, depuis le cadre (3) jusqu'à la première extrémité (41) de la masse d'épreuve, le long d'une ligne moyenne qui est parallèle à l'axe de déplacement (X) du cadre, et qui, selon un axe Z perpendiculaire au plan moyen du support, a une épaisseur (t_{NEMS}) inférieure à l'épaisseur (t_{MEMS}) de la masse (4) d'épreuve,
∘ un élément de retenue (60) comportant une paroi de retenue (61)
- qui est perpendiculaire au plan moyen (P) du support (2),
- qui, selon une direction parallèle à l'axe (X) de déplacement du cadre, a une extension (a) inférieure à un quart de l'épaisseur de la paroi de retenue selon l'axe Z,
- et qui se raccorde d'une part au cadre (3) mobile, et d'autre part à la première extrémité (41) de la masse (4) d'épreuve.

2. Dispositif micro-électromécanique selon la revendication 1 dans lequel la paroi (50) mince a une épaisseur (t_{NEMS}) inférieure à un dixième de l'épaisseur (t_{MEMS}) de la masse (4) d'épreuve.

3. Dispositif (1) selon l'une des revendications précédentes, dans lequel ladite extension (a) de la paroi de retenue est inférieure à un dixième de son épaisseur.

4. Dispositif (1) selon l'une des revendications précédentes, dans lequel la paroi de retenue (61) s'étend dans une direction parallèle à l'axe de rotation (Y) de la masse (4) d'épreuve, depuis une première extrémité (611) jusqu'à une deuxième extrémité (612) de la paroi de retenue, et dans lequel :
- la première extrémité (611) et la deuxième extrémité (612) de la paroi de retenue sont raccordées toutes deux au cadre (3) mobile, tandis que la masse (4) d'épreuve se raccorde à la paroi de retenue (61) dans une zone médiane de ladite paroi, entre ces deux extrémités, ou dans lequel
- la première extrémité et la deuxième extrémité de la paroi de retenue sont raccordées toutes deux à la masse d'épreuve, tandis que le cadre se raccorde à la paroi de retenue dans une zone médiane de ladite paroi, entre ces deux extrémités.

5. Dispositif selon l'une des revendications 1 à 3, dans lequel la paroi de retenue s'étend dans une direction parallèle à l'axe de rotation de la masse d'épreuve, depuis une première extrémité jusqu'à une deuxième extrémité de la paroi de retenue, la première extrémité de la paroi de retenue étant raccordée au cadre mobile tandis que sa deuxième extrémité est raccordée à la masse d'épreuve, ou inversement.

6. Dispositif selon la revendication 5, comprenant une paroi de retenue supplémentaire,
- qui est perpendiculaire au plan moyen du support,
- qui, selon une direction parallèle à l'axe (X) de déplacement du cadre, a une extension inférieure à un quart de l'épaisseur de la paroi de retenue selon l'axe Z,
- qui s'étend, dans une direction parallèle à l'axe de rotation de la masse d'épreuve, depuis une première extrémité jusqu'à une deuxième extrémité de la paroi de retenue supplémentaire, la première extrémité de la paroi de retenue supplémentaire étant raccordée au cadre mobile tandis que sa deuxième extrémité est raccordée à la masse d'épreuve, ou inversement.

7. Dispositif (1) selon l'une des revendications précédentes, dans lequel ladite paroi (50) est formée par une portion d'une couche supérieure (12) mince en silicium d'un substrat SOI en silicium sur isolant, et dans lequel le support (2) du dispositif est formé par une couche support épaisse dudit substrat SOI.

8. Dispositif (1) selon l'une des revendications précédentes, de type gyromètre, dans lequel le cadre, la masse d'épreuve et la liaison sont appelés respectivement premier cadre (3), première masse d'épreuve (4) et première liaison (5), le dispositif (1) et comprenant, en outre :
- un deuxième cadre (3') mobile, guidé en translation par rapport au support (2) selon ledit axe de déplacement (X),
- une deuxième masse d'épreuve (4'), qui s'étend depuis une première extrémité (41') jusqu'à une deuxième extrémité (42') de la deuxième masse d'épreuve (4'), sa deuxième extrémité (42') étant située du côté de la première masse d'épreuve (4) tandis que sa première extrémité (41') est située à l'opposé,
∘ la première extrémité (41') de la deuxième masse (4') étant reliée au deuxième cadre (3') par une deuxième liaison (5') mécanique identique à la première liaison (5'),
∘ la deuxième masse d'épreuve (4') étant reliée, du côté de sa deuxième extrémité (42') mobile, au même organe (7) de détection de pivotement que la première masse d'épreuve (4),
- ledit organe de détection étant un levier, mobile en rotation autour d'un axe de rotation de détection (Delta3) qui est parallèle à l'axe de rotation (Delta1) de la première masse d'épreuve (4), le levier étant relié d'un côté à la première masse d'épreuve (4), et de l'autre à la deuxième masse d'épreuve (4').

9. Dispositif (1) selon la revendication précédente, comprenant en outre un système d'actionnement électromécanique configuré pour imposer à chacun des cadres (3, 3') mobiles une oscillation selon ledit axe de déplacement (X), le déplacement du premier cadre (3) par rapport au support, et le déplacement du deuxième cadre (3') par rapport au support (2) ayant une même amplitude et des sens opposés l'un à l'autre.
